Europäisches Patentamt

European Patent Office

Office européen des brevets

(19)

(11) Numéro de publication: **0 228 336
B1**

(12) **FASCICULE DE BREVET EUROPEEN**

(45) Date de publication du fascicule du brevet:
20.06.90

(51) Int. Cl.⁵: **A23B 4/06**, A23B 4/08

(21) Numéro de dépôt: **86460025.9**

(22) Date de dépôt: **19.12.86**

(54) Procédé et installation de traitement de viandes au cours de leur réfrigération.

(30) Priorité: **20.12.85  FR 8519198**

(43) Date de publication de la demande:
**08.07.87 Bulletin 87/28**

(45) Mention de la délivrance du brevet:
**20.06.90 Bulletin 90/25**

(84) Etats contractants désignés:
**AT BE CH DE ES GB GR IT LI LU NL SE**

(56) Documents cités:
**FR-A- 984 945
FR-A- 1 095 946
FR-A- 2 224 094
FR-A- 2 382 861
FR-A- 2 389 330
FR-A- 2 422 338
NL-A- 7 709 248
US-A- 1 420 740
US-A- 3 844 135
US-A- 4 244 978
US-A- 4 271 683
US-A- 4 358 935**

(73) Titulaire: **COOPERATIVE AGRICOLE DES ELEVEURS DE LA REGION DE LAMBALLE Dite C.O.O.P.E.R.L., Z.I., F-22400 Lamballe(FR)**
Titulaire: **Bourdel, Jacques, André, J., La Croix de Pinet, F-38410 St. Martin d'Uriage(FR)**

(72) Inventeur: **Bourdel, Jacques, André Jean, La Croix de Pinet, F-38410 St Martin D'Uriage(FR)**

(74) Mandataire: **Martin, Jean-Jacques et al, Cabinet REGIMBEAU 11, rue Franz Heller, F-35700 Rennes(FR)**

## Description

La présente invention concerne un procédé et une installation de traitement de viandes au cours de leur réfrigération, traitement qui est destiné à réduire les pertes en eau de ces viandes.

Immédiatement après l'abattage d'animaux de boucherie ou de charcuterie, il est procédé dans les abattoirs à la réfrigération rapide des carcasses de viande. Cette opération, usuellement appelée «froid-choc» ou «resuage rapide», qui consiste à faire passer le corps de l'animal d'une température de 40°C environ à une température voisine de +7°C en un temps relativement court (de l'ordre de 1 h 30 à 2 h) a pour effet d'améliorer considérablement la qualité et la durée de conservation de la viande en empêchant la formation précoce de germes microbiens.

Au terme de cette réfrigération rapide, les carcasses sont soit stockées directement en chambre froide ou en camions frigorifiques, soit dépecées; dans ce dernier cas, les différents morceaux découpés se trouvent à une température favorable pour le stockage ou le conditionnement direct en vue de l'expédition.

On a constaté que cette réfrigération rapide des carcasses encore chaudesprovoquait une déshydratation superficielle de la viande, qui entraîne une perte d'eau relativement importante. Ainsi, pour une carcasse de porc par exemple, la masse perdue peut atteindre 1 kg environ par porc. Cette déshydratation superficielle s'observe sur une profondeur de 2 mm environ; elle produit un fripage des coupes de viande, ce qui nuit à la bonne présentation des carcasses.

Selon le procédé exposé dans FR-A 1 095 946, on tente de résoudre ce problème en introduisant la viande fraîchement abattue dans des chambres frigorifiques ayant une très forte humidité relative, afin d'empêcher la formation sur la viande d'une couche sèche extérieure. Un tel procédé n'est pas très efficace dans la mesure où l'air situé à la surface de la viande a nécessairement un taux hygrométrique beaucoup plus faible (à cause de la température de la viande), et l'eau contenue dans la viande peut donc s'évaporer. Il semble en outre que l'entreposage des viandes, durant tout le traitement, dans une ambiance très humide, favorise le développement des germes et conduise donc à une dégradation rapide de la viande.

Dans FR-A 2 224 094, il est proposé d'arroser périodiquement les carcasses d'une solution de chlore.

Malheureusement un tel traitement, par suite du ruissellement superficiel de la solution, est très nuisible à l'aspect de la viande; de plus, celle-ci se trouve imprégnée d'une odeur de chlore, très néfaste pour la commercialisation ultérieure de la viande.

La présente invention vise à résoudre ces différentes difficultés en proposant un traitement des carcasses, au cours de leur réfrigération, qui permette de réduire sensiblement leurs pertes en eau.

Ce résultat est obtenu,conformément à la présente invention, par le fait qu'on expose la surface des viandes, au fur et à mesure que leur température s'abaisse, à des bouffées successives de brouillard d'eau stérilisée. Ainsi, les viandes sont enveloppées régulièrement et périodiquement d'une atmosphère saturée d'eau qui empêche, ou du moins réduit sensiblement, leur déshydratation superficielle.

L'expérience a démontré qu'un résultat particulièrement intéressant est obtenu lorsque le diamètre moyen des gouttelettes du brouillard diffusé est compris entre dix et deux cent micromètres, et de préférence entre trente et cent micromètres; ce diamètre peut être abaissé progressivement au cours du traitement, les gouttelettes étant avantageusement d'autant plus fines que la température de la carcasse traitée est basse.

Dans le cas ou la durée de la réfrigération est de l'ordre de 1 h 30 à 2 h, on expose les viandes à un nombre de bouffées successives qui est avantageusement compris entre dix et cinquante, par exemple de l'ordre d'une trentaine.

Par ailleurs, il est intéressant, éventuellement, avant le traitement, de soumettre les viandes à un arrosage d'eau salée (sérum physiologique), ce dépôt de sel initial évitant l'éclatement des cellules par pression osmotique et favorisant ainsi la conservation et la couleur des viandes.

L'installation selon l'invention, qui permet la mise en oeuvre de ce procédé, comprend une salle de réfrigération de type connu, dans laquelle circule un dispositif de convoyage des viandes; conformément à l'invention, cette installation est équipée d'une série de cabines de brouillard, situées à l'intérieur de la salle de réfrigération, et disposées sur la trajectoire des viandes; chacune de ces cabines comporte plusieurs buses de pulvérisation qui sont agencées pour diffuser une bouffée de brouillard d'eau stérilisée à la surface des viandes lorsque celles-ci passent dans la cabine.

Dans une forme de réalisation préférentielle, plus particulièrement conçue pour le traitement de demi-carcasses d'animaux, les deux parois latérales des cabines, c'est-à-dire les parois situées de chaque côté de la trajectoire des viandes, sont pourvues chacune d'un jeu de buses de pulvérisation et celles-ci sont dirigées vers le centre de la cabine. Grâce à cette disposition, la totalité de la carcasse est enveloppée dans un nuage de brouillard lorsqu'elle traverse une cabine.

Ces parois ont avantageusement la forme d'une armature creuse dans laquelle circule un liquide antigel empêchant leur givrage, ou permettant leur dégivrage en fin de journée.

Les faces avant et arrière sont de préférence fermées par des bavettes souples et élastiques, dont le rôle est de limiter l'échappement du brouillard hors des cabines, tout en autorisant bien entendu le passage des viandes.

Selon une caractéristique intéressante de l'invention, les buses de pulvérisation sont montées sur rotule et sont donc orientables en tous sens; elles sont en outre avantageusement montées sur des supports ajustables verticalement et/ou horizontalement et sont réglables en débit et en granulométrie. Il est donc possible d'adapter à volonté la position, la direction, la force des jets et la finesse du brouillard à la forme et à la nature des carcasses et des morceaux de viande visés.

Les buses de pulvérisation d'eau stérilisée sont protégées contre le gel par un enroulement entourant leur tête de diffusion, dans lequel circule un fluide de réchauffage caloporteur tel que de l'alcool par exemple.

D'autres caractéristiques et avantages de l'invention apparaîtront de la description et des dessins annexés qui en présentent, à titre d'exemple non limitatif, un mode de réalisation préférentiel.

La figure 1 est une vue de dessus générale et schématique d'une installation conforme à l'invention;

La figure 2 représente une cabine de brouillard, coupée par un plan vertical transversal par rapport à la trajectoire des viandes;

La figure 3 est une vue de face d'une cabine de brouillard;

La figure 4 est une vue de détail représentant en coupe une buse de pulvérisation montée sur un support;

La figure 5 est une vue destinée à expliquer comment se fait le rapprochement de deux demi-carcasses sur un tinet pourvu de deux paires d'encoches, ce tinet équipant le dispositif de convoyage des viandes dans l'installation;

La figure 6 représente en vue de dessus et en coupe la cabine de brouillard des figures 2 et 3, le plan de coupe étant désigné par VI-VI à la figure 2.

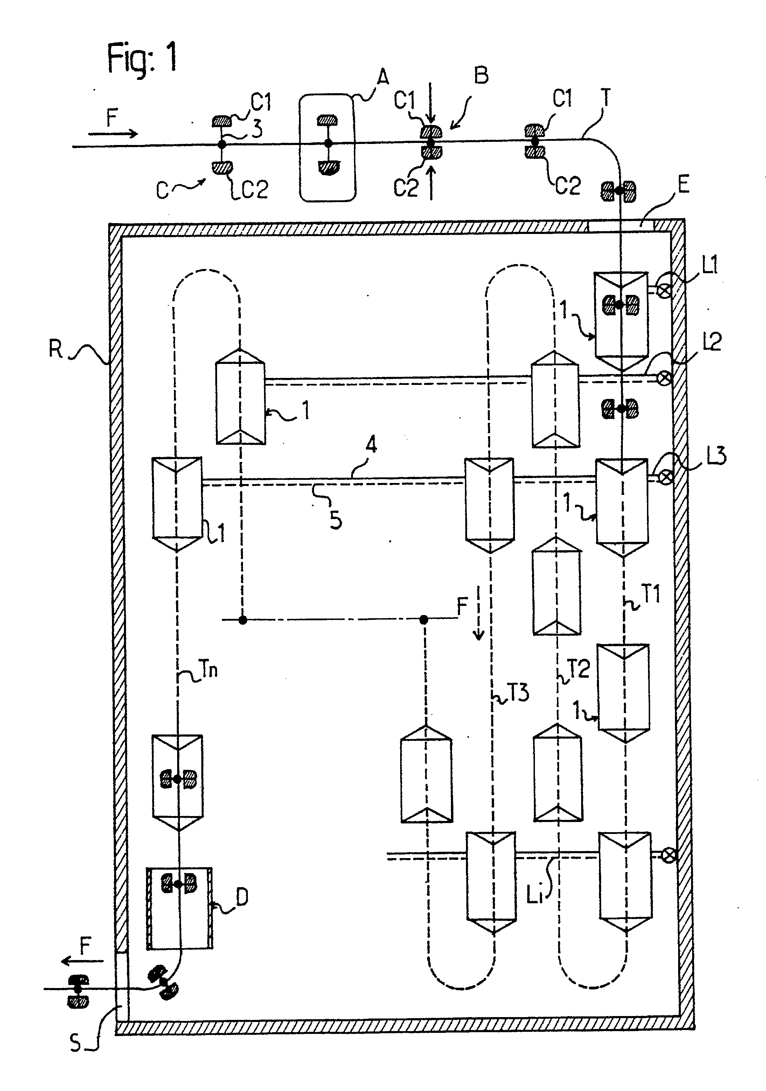

La salle de réfrigération R représentée à la figure 1 est une chambre rectangulaire, de grandes dimensions, dans laquelle la température est comprise entre + 3° C et - 6° C environ. Cette salle de réfrigération est destinée à réaliser le "froid-choc" de carcasses d'animaux fraîchement abattus, par exemple de carcasses de porcs. A cet effet, la salle de réfrigération contient un système de convoyage, de type traditionnel, qui fait circuler les carcasses le long d'une trajectoire en forme de serpentin T, de longueur totale égale à 500 m environ, à l'intérieur de la salle R; la vitesse de convoyage des carcasses est choisie de telle manière que le temps de séjour des carcasses dans cette salle de réfrigération soit de l'ordre de 1 h 45 mm. Ce système de convoyage comprend un rail 2 dont le contour correspond à celui de la trajectoire T, ce rail guidant une série de tinets 3 auxquels sont accrochées les carcasses; le rail 2 pénètre dans la salle R par une porte d'entrée E et en sort par une porte de sortie S. On a désigné par $T_1$, $T_2$, $T_3$,... $T_n$ les différents tronçons de trajectoire parallèles entre eux à l'intérieur de la salle R.

En amont de la salle de réfrigération, se trouvent un poste d'arrosage en eau salée des carcasses, désigné par A, et une machine à rapprocher et orienter les demi-carcasses, désignée par B.

A l'intérieur de la salle de réfrigération R, la trajectoire de convoyage des carcasses T passe par une série de cabines 1; le nombre total des cabines est de l'ordre d'une trentaine; on notera que l'espacement des cabines augmente lorsqu'on se déplace sur la trajectoire T, dans le sens de déplacement des carcasses; ainsi, le premier tronçon de trajectoire $T_1$ comprend par exemple quatre cabines; le second tronçon $T_2$ comprend trois cabines; chacun des tronçons additionnels comprend seulement deux cabines.

Les cabines 1 sont alimentées en eau stérilisée et en liquide caloporteur, respectivement par des conduites 4, 5, qui sont disposées suivant des lignes $L_1$, $L_2$, $L_3$... $L_i$, qui sont disposées transversalement par rapport aux tronçons parallèles de la trajectoire $T_1$, $T_2$, $T_3$... $T_n$.

Sur la figure 1, qui est vue générale schématique de l'installation, l'ensemble des trajectoires et l'ensemble des lignes n'ont pas été représentés afin de ne pas alourdir inutilement cette figure.

Après avoir parcouru l'ensemble des cabines 1, la trajectoire des carcasses passe par un tunnel de séchage D, avant de quitter la salle R par la sortie S; sur les dessins, le sens de circulation des carcasses est figuré par des flèches F.

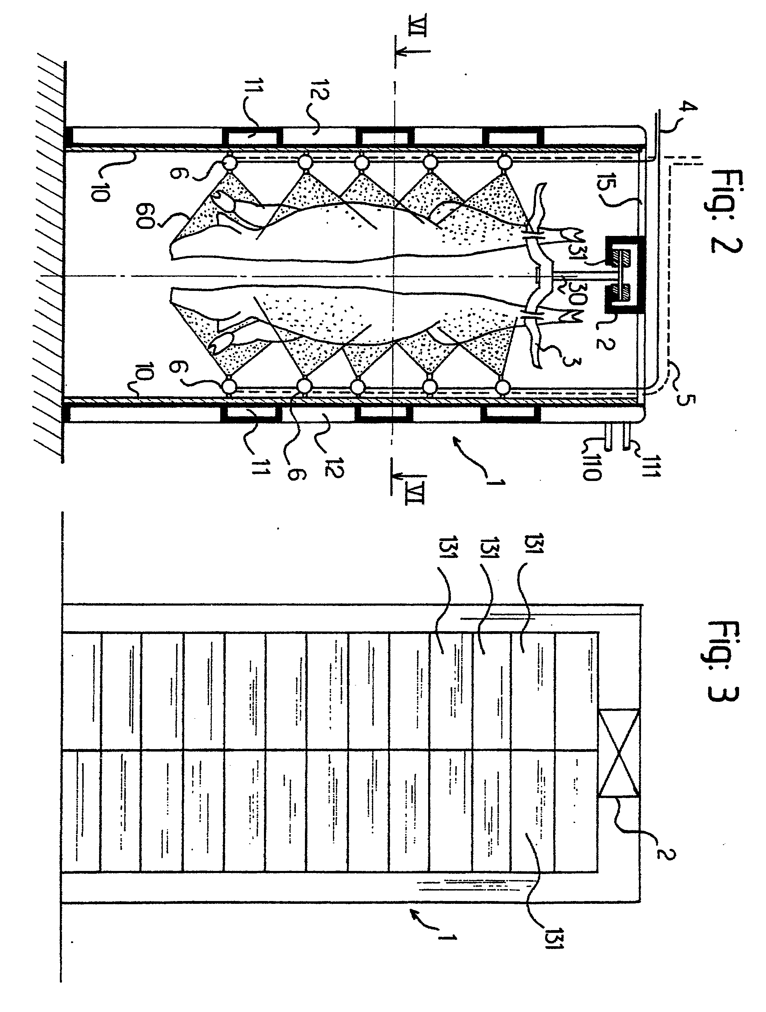

Les figures 2, 3 et 6, montrent la structure d'une cabine de brouillard 1.

Cette cabine a la forme d'un tunnel comprenant deux parois latérales verticales 10 et une partie supérieure 15 qui supporte le rail de convoyage 2.

Chaque paroi latérale 10 est pourvue d'un certain nombre de buses de pulvérisation 6, par exemple de cinq buses; ces dernières sont réparties en hauteur et en largeur sur les parois 10, de manière appropriée qui dépend de la forme des carcasses; elles sont alimentées en eau stérilisée par des conduites 4, et en liquide caloporteur destiné à empêcher leur givrage, par des conduites 5.

Les parois latérales 10 comprennent une armature creuse, qui présente des caissons verticaux 12 et des caissons horizontaux transversaux 11, aptes à recevoir une circulation de liquide antigel; les conduits d'arrivée et de sortie de ce liquide antigel à la cabine portent les références 110, 111.

Les tinets 3, dont la forme et la fonction seront expliquées plus en détail ultérieurement, sont suspendus au rail 2, par l'intermédiaire d'une tige 30 montée sur des galets 31; un dispositif d'entraînement de type classique, par exemple à chaîne, fait rouler les galets 31 dans le rail 2, assurant ainsi le cheminement continu des tinets le long du rail.

Les faces avant et arrière de la cabine 1 sont fermées par des bavettes souples et élastiques généralement désignées par les références 13 et 14. Ces bavettes souples, en polyéthylène ou matière similaire, ont la forme de languettes disposées verticalement de manière à former des parois continues; ces parois constituent deux dièdres parallèles (ayant en vue de dessus la forme de chevrons); l'arête de ces dièdres est dirigée vers l'aval de la trajectoire des carcasses.

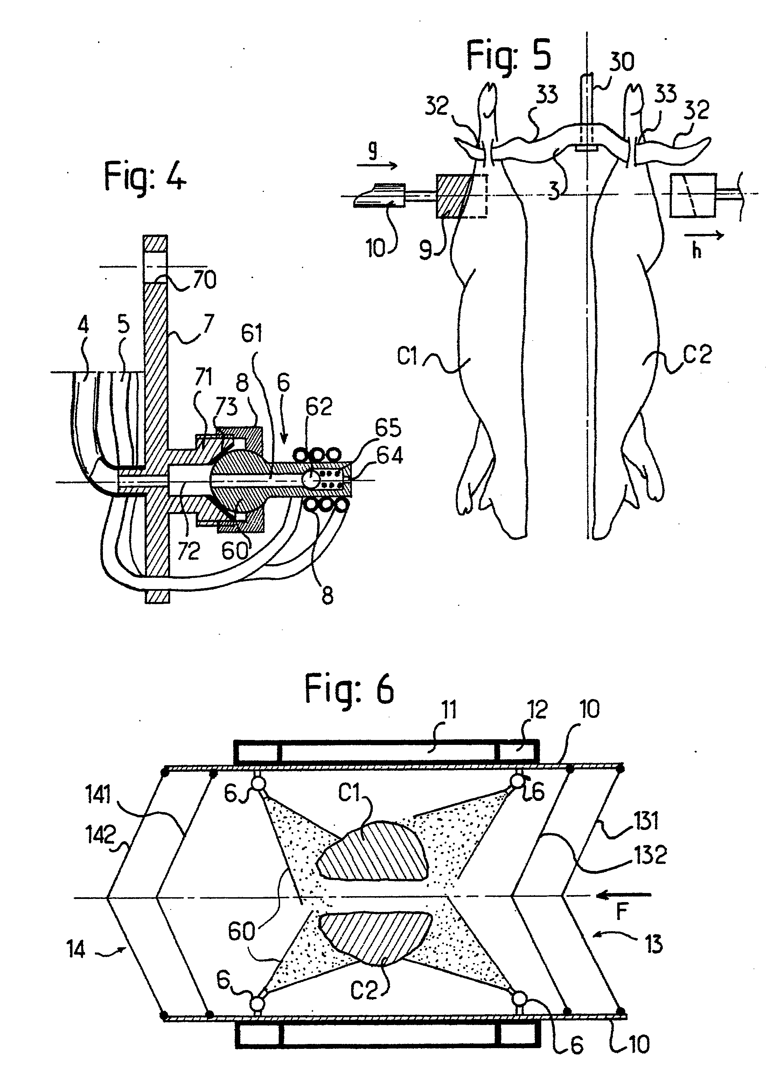

La figure 4 est une vue de détail d'une buse de pulvérisation montée sur un support. Ce dernier, désigné par 7, présente un trou 70, permettant sa fixation - de préférence réglable - à la paroi 10 de la cabine; la buse de pulvérisation, généralement désignée par 6, est réalisée par exemple en carbure de tungstène. Elle comprend un alésage 61 d'amenée d'eau, cet alésage étant fermé par un clapet à billes 62 sollicité par un ressort 65; la buse présente un ajutage de sortie 64 de préférence réglable. La partie 60 de cette buse, qui est située à l'extrémité opposée à l'ajutage 64, a la forme d'une sphère 60; cette sphère est emprisonnée contre un siège conique 71 du support 7, au moyen d'un écrou taraudé 8 vissé sur ce support; une garniture d'étanchéité 73 est interposée entre la sphère 60 et le siège de support 71. Ce support présente lui-même un alésage 72 adapté pour recevoir le conduit d'amenée d'eau stérilisée 4, cet alésage se trouvant en correspondance avec l'alésage 61 de la buse de pulvérisation.

L'extrémité active de la buse 6 (à laquelle se trouvent le clapet 62 et l'ajutage 64) est entourée par un enroulement 8 relié au conduit 5 dans lequel circule le fluide caloporteur déjà mentionné plus haut. La sphère 60 constitue une rotule d'articulation pour la buse 6, permettant d'orienter les jets d'eau pulvérisée en tout sens à l'intérieur de la cabine 1.

Les différents moyens de commande destiné à amener de l'eau stérilisée aux buses 6, ainsi que les dispositifs faisant circuler le fluide caloporteur dans l'enroulement 8, et le liquide antigel dans l'armature 11-12 des cabines, sont des moyens dont la conception est à la portée de l'homme de l'art; ces moyens n'ont pas été représentés dans un simple but de simplification.

A la figure 5, on a représenté un tinet 3 destiné à équiper l'installation selon l'invention. Ce tinet est composé de deux branches généralement horizontales, disposées symétriquement par rapport à l'axe de la tige d'accrochage verticale 30; chacune de ces branches présente deux encoches 32, 33 situées respectivement à l'extrémité libre de la branche et à la partie centrale de celle-ci. Les branches du tinet 3 permettent chacune l'accrochage, par un tendon de jarret, d'une demi-carcasse de porc. Ces demi-carcasses peuvent se trouver en position rapprochée, ou au contraire en position éloignée l'une de l'autre, selon qu'elles sont accrochées dans l'une ou l'autre des paires d'encoches 33, 32.

La figure 5 est destinée à illustrer la manière dont se fait le rapprochement de deux demi-carcasses $C_1$, $C_2$ sur un tinet; le dispositif permettant de réaliser ce rapprochement comprend deux paires de sabots presseurs 9, dont la forme est adaptée pour coopérer avec la partie du jarret d'une demi-carcasse située juste en dessous du tinet. Les sabots 9 sont portés par des moyens de déplacement horizontal 10, par exemple sous forme de vérins hydrauliques.

Lorsque les deux carcasses $C_1$, $C_2$ se trouvent en postion écartée (supportées par les encoches d'extrémité 32) et qu'on veut les rapprocher, on fait passer le tinet 3 en vis à vis des sabots presseurs 9; on provoque l'extension des vérins 10, de manière à repousser l'une vers l'autre les demi-carcasses $C_1$, $C_2$, jusqu'à ce qu'elles se positionnent dans les encoches 33. A la figure 5, la demi-vue de gauche représente le début de l'opération de rapprochement (extension du vérin 10 figurée par la flèche g); La demi-vue de droite représente la fin de l'opération, le retrait du sabot 9 étant figuré par la flèche h.

Nous allons maintenant décrire la manière dont se fait le traitement de carcasses de porcs, au moyen de l'installation qui vient d'être décrite.

Tout d'abord, les buses sont orientées et ajustées à l'intérieur de la série de cabines 1, de telle manière que les jets de brouillard puissent enrober correctement et complètement les demi-carcasses $C_1$, $C_2$ lorsque celles-ci traversent ces cabines. Les ajutages 64 des buses 6 sont définis, ou ajustés (lorsque ceux-ci sont ajustables) de telle manière que le diamètre moyen des gouttelettes pulvérisées soit compris entre trente et cent micromètres; de préférence, ce réglage préliminaire est tel que le diamètre des gouttelettes soit de plus en plus petit au fur et à mesure qu'on parcourt la salle de réfrigération R. Ainsi, on aura par exemple pour les cinq premières cabines un diamètre moyen de gouttelettes de l'ordre de cent micromètres, pour les cinq cabines suivantes un diamètre moyen de l'ordre de cinquante micromètres, et pour les vingt cabines restantes, un diamètre moyen de l'ordre de trente micromètres.

Les carcasses C, composées de deux demi-carcasses $C_1$, $C_2$, arrivent dans l'installation sur les tinets de convoyage 3; les deux demi-carcasses $C_1$, $C_2$ se trouvent alors en position mutuellement écartée sur les tinets en raison du traitement que la carcasse vient de subir : enlèvement des organes internes, après fendage de la carcasse; en effet, ce enlèvement est facilité lorsque les deux demi-carcasses sont bien écartées l'une de l'autre. Les carcasses arrivant dans l'installation ont généralement reçu un traitement préliminaire destiné à leur enlever les poils, par trempage dans des bacs d'échaudage et par flambage. La température à coeur des carcasses est de l'ordre de 40° C. Les carcasses de porcs passent ensuite à un poste A où elles sont aspergées d'eau stérilisée et salée; cet arrosage est destiné à laver les carcasses et à déposer sur celles-ci une certaine quantité de sel qui est favorable à une bonne conservation de la couleur des viandes. Cet arrosage est avantageusement temporisé, c'est-à-dire déclenché automatiquement au moment du passage des carcasses, grâce à des détecteurs appropriés. Après cet arrosage, les deux moitiés du porc sont rapprochées automatiquement l'une de l'autre au poste B, lequel est équipé de sabots presseurs 9 précédemment décrits. A ce poste, des moyens appropriés (non représentés) réalisent également l'orientation correcte et le verrouillage des tinets sur leur axe, de manière à définir un positionnement exact des carcasses et assurer un fonctionnement reproductible de l'installation. Les deux demi-carcasses de porc $C_1$, $C_2$ se trouvant en position rapprochée sur leurs tinets, entrent alors par la porte E dans la salle de réfrigération et vont traverser successivement l'ensemble des cabines 1 au cours du "froid-choc". L'entrée de deux demi-carcasses dans une cabine est autorisée par la déformation des bavettes souples 131, 132 qui constituent la face avant de cette cabine. Automatiquement, grâce à des moyens de commande temporisés, et à des moyens de détection d'arrivée des tinets, les buses 6 diffusent une bouffée de brouillard qui enveloppe les carcasses $C_1$, $C_2$ au moment de leur passage dans la cabine. Ces jets, généralement plats, ont été désignés par la référence 60 sur les figures 2 et 6. La durée de la bouffée de brouillard émise dure seulement quelques secondes, par exemple trois secondes. Ces très fines gouttelettes vont recouvrir toute la surface de la viande, puis vont s'évaporer sous l'action de la chaleur de cette viande et maintenir dans leur voisinage une hygrométrie très élevée correspondant à la température de l'endroit. Lorsque ces gouttelettes sont presque toutes évaporées, les carcasses de viande sont arrivées à la cabine suivante où l'opération recommence, et ainsi de suite.

En raison de la température élevée des carcasses, l'évaporation est naturellement plus rapide au début du traitement. C'est pourquoi l'espacement des cabines 1 est plus faible dans la première partie de la trajectoire T.

La granulomètrie du brouillard émis par les buses de pulvérisation est très importante. Si les gouttes sont trop grosses, il faut une grande masse d'eau pour recouvrir la viande, ce qui entraîne des ruissellements nuisibles à son aspect; en outre, l'hygrométrie est plus difficile à maintenir sur toute la surface. Si les gouttes sont trop fines, elles sont entraînées par les vents du système d'aspiration de la salle de réfrigération et de plus adhèrent mal à la surface des viandes; d'autre part, l'évaporation se fait trop rapidement. L'expérience a montré que le diamètre optimal des gouttes était compris entre trente et cent micromètres, et qu'il était souhaitable d'utiliser des gouttes plus grosses au départ, c'est-à-dire lorsque la température des carcasses était élevée par rapport à la température de la salle de réfrigération.

La durée totale du traitement, c'est-à-dire la durée totale d'émission de bouffées de brouillard par carcasse est comprise entre cinquante et cent secondes, ce qui est très court par rapport à la durée de la réfrigération (1 h 45 mm environ).

A la fin du traitement, et avant de quitter la salle R, il est avantageux de faire passer les carcasses dans un petit tunnel D de séchage très rapide, dont la fonction est de former une légère pellicule déshydratée à la surface des viandes, cette pellicule favorisant une bonne conservation.

Grâce au procédé et à l'installation selon l'invention, il est possible de réduire la perte de masse en eau par porc à 200 g environ (au lieu de 1 kg), ce qui améliore considérablement l'aspect des viandes produites.

Cette technique permet un mode de refroidissement (choix des températures d'évaporation plus élevées) différent des modes traditionnels, permettant des économies d'énergie importantes.

On notera que l'alimentation en eau et en liquide caloporteur (par exemple alcool) destiné à éviter le givrage des buses, se fait par des lignes transversales $L_1$, $L_2$, $L_3$... $L_i$. Grâce à cet arrangement, si l'une de ces lignes d'alimentation, ou ses moyens de commande, tombent en panne, il est possible tout de même de faire fonctionner l'installation sans remettre fondamentalement en cause la qualité du traitement; en effet, grâce à cette disposition certaines cabines seulement, régulièrement réparties le long de la trajectoire des carcasses, ne seront pas en état de marche.

Il va de soi que l'invention qui vient d'être décrite n'est pas limitée au mode de réalisation préférentiel qui vient d'être décrit; elle en englobe au contraire toutes les variantes.

C'est ainsi évidemment que cette invention peut être appliquée à divers types de viandes et pas seulement à des carcasses de porc; elle pourrait s'appliquer notamment à des carcasses de bovins et d'ovins ou même à des animaux plus petits comme des lapins ou des poulets. Il va se soi que la forme et les dimensions des cabines de brouillard, ainsi que le nombre et l'emplacement des buses de pulvérisation seront adaptés au type de produit traité.

Bien entendu, la protection des différentes parties de l'installation contre le gel, et notamment des buses de pulvérisation, pourrait également se faire électriquement.

Le séchage final des carcasses pourrait se faire sans tunnel D, simplement par déshydratation au froid dans la salle de réfrigération, à la sortie de la série de cabines.

## Revendications

1. Procédé de traitement de viandes au cours de leur réfrigération, destiné à réduire leurs pertes en eau, caractérisé par le fait qu'au fur et à mesure que leur température s'abaisse, on expose la surface des viandes à des bouffées successives de brouillard d'eau stérilisée.

2. Procédé selon la revendication 1, caractérisé par le fait que le diamètre moyen des gouttelettes du brouillard est compris entre 10 et 200 micromètres et de préférence entre 30 et 100 micromètres.

3. Procédé selon l'une des revendications 1 ou 2, caractérisé par le fait que le nombre de bouffées de brouillard auxquelles sont exposées les viandes au cours de leur réfrigération est compris entre dix et cinquante et est de préférence de l'ordre de trente.

4. Procédé selon l'une des revendications 1 à 3, caractérisé par le fait que la durée de chaque bouffée de brouillard est comprise entre 1 et 5 secondes.

5. Procédé selon l'une des revendications 1 à 4, caractérisé par le fait que le diamètre moyen des gouttelettes de brouillard diffusé diminue au cours du traitement.

6. Procédé selon l'une des revendications 1 à 5, caractérisé par le fait qu'avant traitement, on soumet les viandes à un arrosage d'eau salée.

7. Installation pour le traitement de viandes au cours de leur réfrigération, qui comprend une salle de réfrigération dans laquelle circule un dispositif de convoyage des viandes, caractérisée par le fait qu'elle est équipée d'une série de cabines de brouillard (1) disposées sur la trajectoire (T) des viandes, ces cabines (1) étant pourvues chacune de plusieurs buses de pulvérisation (6) agencées pour diffuser une bouffée de brouillard d'eau stérilisée à la surface des viandes lorsque celle-ci passent dans la cabine (1).

8. Installation selon la revendication 7, caractérisée par le fait que les deux parois latérales (10) des cabines de brouillard, situées de chaque côté de la trajectoire (T) des viandes, sont pourvues chacune d'un jeu de buses de pulvérisation (6) dirigées vers le centre de la cabine (1).

9. Installation selon l'une des revendications 7 ou 8, caractérisée par le fait que les faces avant (13) et arrière (14) des cabines de brouillard (1) sont fermées par des bavettes souples (131-132; 141-142) qui autorisent le passage des viandes tout en limitant l'échappement du brouillard.

10. Installation selon l'une des revendications 7 à 9, caractérisée par le fait que les parois latérales (10) ces cabines de brouillard (1) comprennent une armature creuse (11-12) dans laquelle circule un liquide antigel.

11. Installation selon l'une des revendications 7 à 10, caractérisée par le fait que les buses de pulvérisation (6) sont orientables.

12. Installation selon l'une des revendications 7 à 11 caractérisée par le fait que les buses de pulvérisation (6) sont protégées contre le gel par un enroulement (8) dans lequel circule un fluide caloporteur.

13. Installation selon l'une des revendications 7 à 12, caractérisée par le fait que le dispositif de convoyage des viandes comprend une série de tinets (3) mobiles dans un rail (2), chacun de ces tinets étant adapté pour supporter les deux demi-carcasses du même animal et comportant deux paires d'encoches (33, 32) qui autorisent l'accrochage des demi-carcasses soit en position rapprochée, soit en position écartée.

14. Installation selon la revendication 13, caractérisée par le fait qu'elle est équipée d'un poste (B), situé en amont de la salle de réfrigération et agencé pour effectuer le rapprochement des demi-carcasses sur les tinets (3), au moyen de sabots presseurs (9).

**Claims**

1. Process for the treatment of meat during refrigeration for the purpose of reducing loss of water, characterized in that as the temperature of the meat is lowered, its surface is subjected to successive gusts of sterilized water mist.

2. Process according to claim 1, characterized in that the mean diameter of the droplets of the mist is between 10 and 200 micrometers, and preferably between 30 and 100 micrometers.

3. Process according to one of claims 1 or 2, characterized in that the number of gusts of mist to which the meat is subjected in the course of its refrigeration is between ten and fifty and preferably of the order of thirty.

4. Process according to one of claims 1 to 3, characterized in that the duration of each gust of mist is between 1 and 5 seconds.

5. Process according to one of claims 1 to 4, characterized in that the mean diameter of the diffused mist droplets decreases in the course of the treatment.

6. Process according to one of claims 1 to 5, characterized in that before the treatment, the meat is sprinkled with salted water.

7. Installation for treating meat in the course of refrigeration, which comprises a refrigeration room in which a meat conveying system operates, characterized in that it is equipped with a series of mist cabins (1) disposed on the path (T) of the meat, each of said cabins (1) being provided with a plurality of atomizer nozzles (6) arranged to diffuse a gust of sterilized water mist over the surface of the meat when the latter passes into the cabin (1).

8. Installation according to claim 7, characterized in that the two side walls (10) of the mist cabins situated on each side of the path (T) followed by the meat, are each provided with a set of atomizer nozzles (6) directed towards the center of the cabin (1).

9. Installation according to one of claims 7 or 8, characterized in that the front face (13) and rear face (14) of the mist cabins (1) are closed by flexible aprons (131–132; 141–142) which allow the passage of the meat while limiting the escape of mist.

10. Installation according to one of claims 7 to 9, characterized in that the side walls (10) of the mist cabins (1) comprise a hollow frame (11–12) in which an antifreeze liquid circulates.

11. Installation according to one of claims 7 to 10, characterized in that the atomizer nozzles (6) are orientable.

12. Installation according to one of claims 7 to 11, characterized in that the atomizer nozzles (6) are protected against freezing by a coil (8) in which a heat transfer medium circulates.

13. Installation according to one of claims 7 to 12, characterized in that the meat conveying system comprises a series of gambrels (3) movable in a rail (2), each of said gambrels being adapted to support the two half-carcasses of the same animal and being provided with two pairs of notches (33, 32) enabling the half-carcasses to be suspended either in a position in which they are close to one another or in a position in which they are remote from one another.

14. Installation according to claim 13, characterized in that it is equipped whith a station (B) situated upstream of the refrigeration room and arranged to move the half-carcasses towards one another on the gambrels (3) by means of presser shoes (9).

**Patentansprüche**

1. Verfahren zur Behandlung von Fleisch während seiner Abkühlung, das dazu bestimmt ist, seinen Wasserverlust zu verringern, gekennzeichnet durch die Tatsache, daß man in dem Maße, in dem sich die Temperatur erniedrigt, die Oberfläche des Fleischs sukzessiven Nebelwolken aus sterilisiertem Wasser aussetzt.

2. Verfahren nach Anspruch 1, gekennzeichnet durch die Tatsache, daß der mittlere Durchmesser der Nebeltropfen zwischen 10 und 200 Mikrometern und vorzugsweise zwischen 30 und 100 Mikrometern liegt.

3. Verfahren nach einem der Ansprüche 1 oder 2, gekennzeichnet durch die Tatsache, daß die Zahl der Nebelwolken, denen das Fleisch während seines Abkühlens ausgesetzt wird, zwischen 10 und 50 liegt und vorzugsweise in der Gegend von 30 liegt.

4. Verfahren nach einem der Ansprüche 1 bis 3, gekennzeichnet durch die Tatsache, daß die Dauer jeder Nebelwolke zwischen 1 und 5 Sekunden liegt.

5. Verfahren nach einem der Ansprüche 1 bis 4, gekennzeichnet durch die Tatsache, daß sich der mittlere Durchmesser der Nebeltröpfchen während der Behandlung verringert.

6. Verfahren nach einem der Ansprüche 1 bis 5, gekennzeichnet durch die Tatsache, daß man vor der Behandlung das Fleisch einer Benetzung mit Salzwasser unterzieht.

7. Vorrichtung zur Behandlung von Fleisch während seiner Abkühlung, die einen Abkühlungsraum aufweist, in dem eine Fleischtransportvorrichtung umläuft, gekennzeichnet durch die Tatsache, daß sie mit einer Reihe von Nebelkabinen (1) ausgestattet ist, die auf dem Fleischtransportweg (T) angeordnet sind, wobei diese Kabinen (1) jeweils mit mehreren Zerstäubungsdüsen (6) ausgestattet sind, die zum Verteilen einer Nebelwolke aus sterilisiertem Wasser auf die Fleischoberfläche angeordnet sind, wenn diese durch die Kabine (1) kommt.

8. Vorrichtung nach Anspruch 7, gekennzeichnet durch die Tatsache, daß die beiden seitlichen Wände (10) der Nebelkabinen, die sich auf jeder Seite des Fleischtransportwegs befinden, jeweils mit einem Satz von Zerstäubungsdüsen versehen sind, die zur Mitte der Kabine hin gerichtet sind.

9. Vorrichtung nach einem der Ansprüche 7 oder 8, gekennzeichnet durch die Tatsache, daß die Vorder- (13) und Rückseiten (14) der Nebelkabinen (1) durch flexible Schürzen (131–132; 141–142) geschlossen sind, die den Durchgang von Fleisch vollständig ermöglichen, während sie das Austreten des Nebels begrenzen.

10. Vorrichtung nach einem der Ansprüche 7 bis 9, gekennzeichnet durch die Tatsache, daß die Seitenwände (10) der Nebelkabinen (1) eine hohle Bewehrung (11–12) aufweisen, in welcher eine Frostschutzflüssigkeit zirkuliert.

11. Vorrichtung nach einem der Ansprüche 7 bis 10, gekennzeichnet durch die Tatsache, daß die Zerstäubungsdüsen (6) ausrichtbar sind.

12. Vorrichtung nach einem der Ansprüche 7 bis 11, gekennzeichnet durch die Tatsache, daß die Zerstäubungsdüsen (6) gegen Einfrieren durch eine Umhüllung (8), in der eine Wärmeübertragungsflüssigkeit zirkuliert, geschützt sind.

13. Vorrichtung nach einem der Ansprüche 7 bis 12, gekennzeichnet durch die Tatsache, daß die Fleischtransportvorrichtung eine Reihe beweglicher Walzen (3) auf einer Schiene (2) aufweist, wobei jede der Walzen geeignet ist, die beiden Halbkarkassen desselben Tieres zu tragen, und ein Paar von Haken (33, 32) aufweist, die das Festhaken der beiden Halbkarkassen sowohl in benachbarter als auch in entfernter Anordnung ermöglichen.

14. Vorrichtung nach Anspruch 13, gekennzeichnet durch die Tatsache, daß sie mit einem Bedienstand (B) ausgestattet ist, der sich oberhalb des Abkühlungsraumes befindet und angeordnet ist, die Annäherung der Halbkarkassen auf den Walzen (3) mittels Druckschuhen durchzuführen.

Fig: 1

EP 0 228 336 B1

Fig: 3

Fig: 2

Fig: 4

Fig: 5

Fig: 6